# EUROPÄISCHE PATENTSCHRIFT

(11) **EP 3 353 248 B1**
(45) Veröffentlichungstag und Bekanntmachung des Hinweises auf die Patenterteilung: **02.09.2020**
(21) Anmeldenummer: 16805788.3
(22) Anmeldetag: 01.12.2016
(51) Int. Cl.: C09D 11/037, B41C 1/14, B41M 1/12, C09D 11/08, C09D 17/00, H05K 1/09, H05K 3/12

(54) **THERMOPLASTISCHE SIEBDRUCKPASTE**
THERMOPLASTIC SCREEN PRINTING PASTE
PÂTE THERMOPLASTIQUE DE SÉRIGRAPHIE

(30) Priorität: 16.12.2015 DE 102015122034
(43) Veröffentlichungstag der Anmeldung: 01.08.2018
(73) Patentinhaber: Ferro GmbH, 60327 Frankfurt am Main (DE)
(72) Erfinder: SCHULZ, Andreas, 61184 Karben (DE); GROSS, Elisabeth, 60389 Frankfurt (DE)
(74) Vertreter: Reinhardt, Markus
(86) Internationale Anmeldenummer: PCT/EP2016/079419
(87) Internationale Veröffentlichungsnummer: WO 2017/102351

(56) Entgegenhaltungen:
- WO-A1-2015/046096
- US-A- 6 077 563
- US-A1- 2002 019 459
- US-A1- 2006 191 625

## Beschreibung

### Gebiet der Erfindung

Die vorliegende Erfindung bezieht sich auf eine thermoplastische Siebdruckpaste für die Dekoration von Glas. Ferner bezieht sich die vorliegende Erfindung auf die Herstellung davon, auf ein Substrat, bedruckt mit der thermoplastischen Siebdruckpaste, auf das Herstellungsverfahren der thermoplastischen Siedruckpaste und des mit der thermoplastischen Siebdruckpaste bedruckten Substrats und auf die Verwendung der erfindungsgemäßen thermoplastischen Siebdruckpaste.

### Stand der Technik

Im Stand der Technik gibt es eine Fülle an Dokumenten, die thermoplastische Siebdruckfarben beschreiben.

Die US 6,077,563 beschreibt ein Verfahren zum Dekorieren eines Substrats, umfassend: Bereitstellen einer hitzehärtbaren Beschichtungszusammensetzung, die ein reaktives polymeres Bindemittel und von etwa 20 bis etwa 80 Gew.-% eines kristallinen Vernetzungsmittels umfasst, wobei die Beschichtungszusammensetzung im Wesentlichen frei von Verdünnungsmitteln ist; Erwärmen der Beschichtungszusammensetzung auf eine erste Temperatur unterhalb einer Härtungstemperatur der Beschichtungszusammensetzung, bei der die Beschichtungszusammensetzung flüssig ist und das kristalline Vernetzungsmittel im Wesentlichen inaktiv ist; Aufbringen der erwärmten Beschichtungszusammensetzung auf ein Substrat, wobei die aufgebrachte Beschichtungszusammensetzung ausreichend abgekühlt wird, damit sie wenigstens teilweise aushärtet; und Erwärmen der aufgebrachten Beschichtungszusammensetzung auf eine zweite Temperatur oberhalb der ersten Temperatur für eine ausreichende Zeitspanne, um das kristalline Vernetzungsmittel zu aktivieren und um die Beschichtungszusammensetzung zu kühlen.

Das reaktive polymere Bindemittel umfasst wenigstens ein Harz, das aus der Gruppe ausgewählt ist, die Acrylharze, Epoxide, Polyester und Urethane umfasst. Das kristalline Vernetzungsmittel umfasst wenigstens ein Material, das aus der Gruppe ausgewählt ist, die Tetramethoxymethylglycoluril und Isocyanurate umfasst. Die angegebenen Vernetzungsmittel weisen hohe Schmelzpunkte auf. Demzufolge werden die Substanzen in einem Temperaturbereich von 80 bis etwa 130 °C erhitzt, bei dem sie flüssig werden und mittels Siebdruck appliziert werden können. Die Härtung der abgekühlten Schicht erfolgt in einem Temperaturbereich von 170°C-240°C.

Die EP 0 604 815 A2 beschreibt ein thermoplastisches Siebdruckverfahren auf Basis einer Mischung von Epoxidharzen und eines Härtemittels. Als Epoxidharze werden Harze auf Basis von Bisphenol A eingesetzt. Die Verwendung von Bisphenol A wird als kritisch angesehen, da Bisphenol A vermutlich Auswirkungen auf die Fruchtbarkeit hat. Im Bereich der Lebensmittelindustrie ist der Grenzwert für BPA erneut deutlich nach unten gesenkt worden.

In der US 5,549,929 wird ein Verfahren zum Dekorieren eines Substrats beschrieben, das die folgenden Schritte umfasst:
A. Bereitstellen einer Beschichtungszusammensetzung, umfassend
   I.) ein polymeres Bindemittel, das ein hydroxyfunktionelles Material (I) und einen Vernetzer umfasst, wobei das polymere Bindemittel von etwa 20% bis etwa 80 Gew.-% des genannten hydroxyfunktionellen Materials ausmacht;
   II.) wenigstens einen kristallinen Reaktivverdünner (III), wobei der kristalline Reaktivverdünner ein kristallines Material umfasst, das eine chemisch kovalente Bindung zu wenigstens einem des hydroxyfunktionellen Materials oder des Vernetzers bilden kann,
B. Erwärmen der Beschichtungszusammensetzung auf eine Temperatur von etwa 70 °C bis etwa 160 °C,
C. Aufbringen der Beschichtungszusammensetzung auf ein Substrat mittels Siebdruck, um wenigstens einen Abschnitt des Substrats zu bedrucken;
D. Abkühlen der genannten aufgebrachten Beschichtungszusammensetzung, um die Beschichtungszusammensetzung zu verfestigen und
E. Erwärmen der Beschichtungszusammensetzung auf eine Temperatur von etwa 150 °C bis auf etwa 250 °C, um die Beschichtungszusammensetzung zu härten.

Bei der Beschreibung der Beispiele wird als kristalliner Reaktivverdünner hydriertes Bisphenol A genannt.

Die WO 2005/012199 A1 offenbart eine härtbare Zusammensetzung, die wenigstens ein härtbares organisches Bindemittel und eine Vielzahl an Teilchen umfasst, die bei oder unterhalb einer ersten Temperatur starr sind und bei einer zweiten Temperatur bei oder unterhalb der Temperatur, an der der Binder härtet, erweichen. Als härtbares organisches Bindemittel wird polyepoxyfunktionelles reaktives Harz genannt.

Und schließlich beschreibt die US 6,214,414 ein Verfahren zur Beschichtung eines keramischen Substrats (Glas) mittels plastischen Siebdruck, wobei mehrere Schichten gedruckt werden. Jede der Beschichtungszusammensetzungen umfasst
- ein organisches Harz, welches polyhydroxyfunktionell, polyepoxyfunktionell oder beides davon ist,
- ein reaktives Wachs
- Pigment und
- ein blockiertes Polyisocyanat, wobei
die Beschichtungszusammensetzung von wenigstens einer Beschichtung einer Schicht im Wesentlichen frei ist von einem aminofunktionellen Härtungsmittel und die Beschichtungszusammensetzung von wenigstens einer Beschichtung einer anderen Schicht ein aminofunktionelles Härtungsmittel umfasst, um die pigmentierten Beschichtungszusammensetzungen zu vernetzen. Die Temperaturen für das Aushärten betragen 150 °C bis 200 °C.

US5202162 beschreibt einen thermoplastischen Siebdruck auf Basis eines Ethylen-Homopolymers, eines Copolymers auf Basis Ethylen und einem ethylenisch ungesättigten Polymer. US3872044 beschreibt ebenfalls einen thermoplastischen Siebdruck auf Basis eines Polyamidharzes, Weichmacher und Pigment. In den Verfahren beider genannter Dokumente findet keine thermische Vernetzung statt.

In jüngerer Zeit gibt es ein wachsendes Bestreben an der Entwicklung von Polymeren auf Basis nachwachsender Rohstoffe. Diese Polymere werden auch als Biopolymere bezeichnet. Der ökologischen Verträglichkeit der Produkte wird eine hohe Aufmerksamkeit geschenkt, insbesondere im Hinblick auf die Nachhaltigkeit.

Die US2002/019459A1 offenbart die Verwendung von Copolymeren, die Vinylfunktionalisierte Polyether enthalten, für die Herstellung von wässrigen Pigmentpräparationen.

Die WO2015/046096A1 beschreibt eine elektrisch leitende Paste. Die Auftragung der Paste findet bei Temperaturen von 150 °C statt.

Die US2006/191625A1 offenbart eine Paste zum Dekorieren eines Substrats, wobei eine Vielzahl an Harzen und Vernetzungsmittel, Polyester, Polyisocyanaten, Pigmenten und Additiven beschrieben werden.

### Aufgabe

Aufgabe der Erfindung ist es, eine umweltfreundliche thermoplastische Siebdruckpaste bereitzustellen, welche einfach herzustellen und darüber hinaus auch kostengünstig ist. Auch sollte die thermoplastische Siebdruckpaste nach dem Aufbringen auf ein Substrat sofort erstarren, so dass ein Aufbringen einer weiteren Farbe möglich ist.

### Detaillierte Beschreibung der Erfindung

Diese Aufgabe konnte überraschend durch die Bereitstellung einer thermoplastischen Siebdruckpaste, die
- ein oder mehrere hydroxyfunktionelle Polyester,
- ein oder mehrere blockierte Polyisocyanate,
- Pigmente, und
- Additive umfasst, und
dadurch gekennzeichnet ist, **dass die Paste bei Raumtemperatur fest ist,** dass der Schmelz- bzw. Erweichungsbereich der thermoplastischen Siebdruckpaste bei Temperaturen von unter 90 °C liegt und dass die Paste frei von Bisphenol-A ist und frei von weiteren an der Polymerisation selbst unmittelbar beteiligten Substanzen, gelöst werden.

Unter Stoffen, die an dem Polymerisationsprozess selbst unmittelbar beteiligt sind, versteht man beispielsweise Stoffe, die die Viskosität vermindern, d.h. sogenannte Reaktivverdünner. Als Reaktivverdünner werden mono-, bi- oder polyfunktionelle Monomere oder Oligomere mit geringer Viskosität verwendet. Daneben sind auch Vernetzungsmittel bzw. Quervernetzungsmittel Stoffe, die an dem Polymerisationsprozess selbst unmittelbar beteiligt sind. Im Stand der Technik gibt es eine Fülle an Dokumenten über Reaktiwerdünner und Vernetzungsmittel, auf die der Fachmann Zugriff hat.

Es hat sich herausgestellt, dass der Polymerisationsvorgang ohne weiteren an der Polymerisation selbst unmittelbar beteiligten Substanzen, d.h. ohne Reaktivverdünner und ohne Vernetzungsmittel bzw. Quervernetzungsmittel, Polymere mit besonders wünschenswerten Eigenschaften in Verbindung mit Pigmenten in Bezug auf die Farbgebung der aufgedruckten Paste auf dem Substrat ergibt. Auch hat diese Vorgehensweise einen ökologischen Hintergrund, nämlich eine Einsparung unnötiger chemischer Zusatzmittel, wodurch man sich auf die wenigen unbedingt erforderlichen chemischen Ausgangstoffe beschränken kann und dennoch durchaus wertvolle Ergebnisse erzielt.

Die einzelnen Komponenten in der thermoplastischen Siebdruckpaste liegen im folgenden Gew.-%-Bereich vor:

| | |
|---|---|
| ein oder mehrere hydroxyfunktionelle Polyester: | 20-80 Gew.-%, |
| ein oder mehrere blockierte Polyisocyanate: | 10-50 Gew.-%, |
| Pigmente | 5-40 Gew.-%, |
| Additive, jeweils | 0-10 Gew.-%. |

Bevorzugt werden hydroxyfunktionelle Polyester in einem Bereich von 30-75 Gew.-%, stärker bevorzugt in einem Bereich von 35-70 Gew.-% und noch stärker bevorzugt in einem Bereich von 40-65 Gew.-% eingesetzt.

Blockierte Polyisocyanate werden bevorzugt in einem Bereich von 15-40 Gew.-% und stärker bevorzugt in einem Bereich von 20-30 Gew.-% eingesetzt.

Ganz besonders bevorzugt ist es, wenn hydroxyfunktionelle Polyester in einem Bereich von 40-65 Gew.-% und blockierte Polyisocyanate in einem Bereich von 20-30 Gew.-% vorliegen.

Die ein oder mehreren hydroxyfunktionellen Polyester sind Verbindungen, die aus nachwachsenden Rohstoffen hergestellt wurden.

Dazu gehören Verbindungen aus nachwachsenden Rohstoffen, ausgewählt aus der Gruppe, enthaltend Rizinusöl, Zucker, Glycerin, Traubenkernöl, Erdnussöl, Sesamöl, Rapsöl, Walnussöl, Weizenkeimöl, Makadamianussöl, Tapiokaöl, Baumwollsaatöl, Sojabohnenöl, Sonnenblumenöl, Leinöl, Mais und Maisöl.

Bevorzugt ist es, dass die ein oder mehreren hydroxyfunktionellen Polyester auf Sebacinsäure und Bernsteinsäure und Butandiolen, ausgewählt aus der Gruppe, enthaltend 1,2-Butandiol, 1,3-Butandiol, 1,4-Butandiol und 2,3-Butandiol; Propandiolen wie 1,2-Propandiol, 1,3-Propandiol; und zyklischen Diolen, wie 1,4-Cyclohexandimethanol; Pentandiolen, wie 1,5-Pentandiol und Hexandiolen, wie 1,6-Hexandiol, basieren.

Die ein oder mehreren blockierten Polyisocyanate sind aus der Gruppe ausgewählt, die aus HDI, IPDI, PDI, TDI, MDI und CHDI besteht.
Als Blockierungsmittel dienen beispielsweise Triazole, Diethylmalonat, Caprolactame, Dimethylpyrazol, Diisopropylamin, Methylethylketoxim oder andere Oxime.

Besonders bevorzugt ist es, wenn die ein oder mehreren hydroxyfunktionellen Polyester auf Sebacinsäure und 1,4-Butandiol basieren und die ein oder mehreren blockierten Polyisocyanate auf HDI basieren.

Die thermoplastische Siebdruckpaste kann zusätzlich weitere Additive enthalten, um Eigenschaften wie Verlauf, chemische und mechanische Resistenz zu verbessern oder um die Erichsen-Härte zu erhöhen. Dazu zählen Additive, die aus der Gruppe ausgewählt sind, die aus Haftvermittlern, Verlaufsmitteln, Rheologiemitteln, Entschäumern, Antikocheradditiven, Dispergieradditiven, Harzen, Thixotropierungsmitteln, Polyisocyanaten unterschiedlichen Typs, besteht.

Die Additive sind in einer Menge von 0-10 Gew.-%, bezogen auf das Gesamtgewicht der Siebdruckpaste, vorhanden.

Als Pigmente können gängige anorganische oder organische Pigmente eingesetzt werden. Die Pigmente liegen je nach gewünschten Farbton in einer Menge von 5-40 Gew.-%, bezogen auf das Gesamtgewicht der Siebdruckpaste, vor. Durch die Verwendung von organischen und/oder anorganischen Pigmenten sind die verschiedensten Farbtöne möglich.

Ein weiterer Gegenstand der Erfindung ist ein Substrat, das mit der erfindungsgemäßen thermoplastischen Siebdruckpaste bedruckt ist.

Das Substrat ist vorzugsweise ein Glas, aber auch andere Gegenstände wie Porzellan, Keramik oder Tonartikel können mit der erfindungsgemäßen thermoplastischen Siebdruckpaste bedruckt werden.

Ein weiterer Gegenstand der vorliegenden Erfindung ist ein Verfahren zur Herstellung der thermoplastischen Siebdruckpaste, welches durch die folgenden Schritte gekennzeichnet ist:
Bereitstellen ein oder mehrerer hydroxyfunktioneller Polyester,
Zugeben von ein oder mehreren blockierten Polyisocyanaten, Pigmenten und Additiven, und
Aufschmelzen bei einer Temperatur im Bereich von 70-90 °C, dispergieren und homogenisieren.

Das Verfahren zur Herstellung des mit der thermoplastischen Siebdruckpaste bedruckten Substrats ist durch die folgenden Schritte gekennzeichnet:
a) Drucken der thermoplastischen Siebdruckpaste nach Anspruch 12 bei einer Temperatur im Bereich von 60-85 °C auf ein Substrat, wobei die Farbe unmittelbar nach dem Druck auf dem abgekühlten Substrat erstarrt, und
b) gegebenenfalls Wiederholen des Schrittes a) zur Aufbringung weiterer Farben auf das Substrat, und
c) Tempern des bedruckten Substrats für 5-30 Minuten bei 140-250 °C.

Die Paste ist bei Raumtemperatur fest. Zum Drucken wird die Paste aufgeschmolzen. Durch den Einsatz von gelöstem Polyisocyanat ist es möglich, bei einer Temperatur im Bereich von 60-85 °C zu drucken. Dies führt zu einer Energieeinsparung. Auch wird das Sieb geringer belastet, wodurch es länger benutzbar ist. Wenn die flüssige Paste mittels Siebdruck auf ein Glas aufgebracht wird, erstarrt die Paste auf dem kalten Glas. Somit können mehrere Farben hintereinander gedruckt werden. Nach dem Druckvorgang wird das bedruckte Glas im Ofen bei einer Temperatur zwischen 140-250 °C für einige Minuten getempert. Dabei findet eine Nachvernetzung statt, dies bedeutet, dass die blockierten Polyisocyanate bei höheren Temperaturen deblockiert werden und sich mit den Hydroxygruppen zu Polyurethanen umsetzen.

Ein weiterer Gegenstand der Erfindung ist die Verwendung der thermoplastischen Siebdruckpaste für die Dekoration von Substraten. Das Substrat ist dabei vorzugsweise ein Glas.

Die Erfindung wird nachfolgend anhand von Beispielen weiter beschrieben, die die Erfindung nicht einschränken.

### Beispiele

Es wurden die folgenden Versuche mit den Versuchsnummern EG9/15, EG141/15, EG144/15, EG146/15, EG167/15 durchgeführt. In der nachfolgenden Tabelle sind die verwendeten Mengen und die physikalischen Eigenschaften angegeben. Die Werte für Gitterschnitt und Erichsen-Härte beziehen sich auf die gedruckte, bei der angegebenen Temperatur gehärtete Farbe:

| **Versuchsnummer** | **EG9/15** | **EG141/15** | **EG144/15** | **EG146/15** | **EG167/15** |
|---|---|---|---|---|---|
| Bio-Polyesterpolyol: PE-BioGT-139A | 47,5 | | | | |
| Bio-Polyesterpolyol: BH 1060-5 | | 60,1 | 58,4 | 61 | |
| Bio-Polyesterpolyol: BH 1064-5 | | | | | 67,2 |
| Titanoxid | 29,4 | | | | |
| Color Index: Pigment Green 7 | | | 12,9 | | |
| Color Index: Pigment Violet 19 | | 10,7 | | | 10,7 |
| Color Index: Pigment Violet 23 | | | | 9,4 | |
| geblocktes Isocyanat | 21,1 | 27,2 | 26,4 | 27,6 | 20,1 |
| OH/NCO | 1:1 | 1:1,2 | 1:1,2 | 1:1,2 | 1:1,2 |
| Haftvermittler (Silan) | 2 | 2 | 2,3 | 2 | 2 |
| Summe der Einsatzstoffe | 100 | 100 | 100 | 100 | 100 |
| Viskosität [Pas] / 200 s⁻¹ / 75°C | 4,07 | 1,32 | 1,23 | 1,26 | n. b. |
| Drucktemperatur | 70°C | 80°C | 75°C | 75°C | 80°C |
| Härtung | 200°C / 10 min | 160°C/ 20 min | 160°C / 20 min | 160°C / 20 min | 160°C / 20 min |
| Gitterschnitt | 0-1 | 1 | 1 | 0-1 | 0-1 |
| Erichsen-Härte | 9 N | 5 N | 4 N | 5,5 N | 6 N |
| Farbe | weiss | rot | grün | violett | rot |

Bei den eingesetzten Polyesterpolyolen handelt es sich jeweils um einen Dihydroxypolyester auf Basis von Sebacinsäure und 1,4-Butandiol.

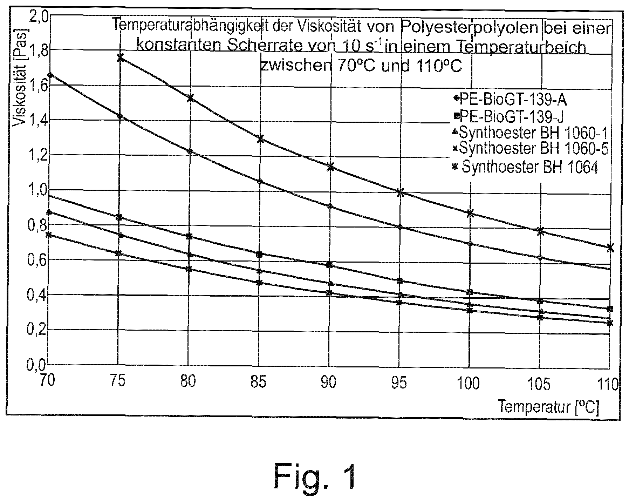

Der Unterschied zwischen PE-BioGT-139A und Synthoester BH 1060-5 lässt sich wie folgt erklären: PE-BioGT-139A wurde im ca. 500 g Maßstab hergestellt, PE-BioGT-139J (hier wurde nur die Viskosität gemessen, siehe Figur 1) ist die Wiederholung. Die Polyesterpolyole mit der Bezeichnung Synthoester wurden im 1 kg- und 5 kg-Maßstab hergestellt. Synthoester BH 1060-5 und Synthoester 1064-5 unterscheiden sich nur durch eine unterschiedliche Qualität der eingesetzten Sebacinsäure. Allerdings unterscheiden sich die Polyesterpolyole leicht in ihren OH-Zahlen bzw. Säurezahlen:

| **Verbindung** | **Säurezahl [mg KOH/g]** | **OH-Zahl [mg KOH/g]** |
|---|---|---|
| PE-BioGT-139A | 4 | 66 |
| PE-BioGT-139J | 3 | 61 |
| Synthoester BH 1060-1 | 2,3 | 59 |
| Synthoester BH 1060-5 | n.b. | 56 |
| Synthoester BH 1064-5 | 2,3 | 38 |

### Versuchsdurchführung

Nachfolgend wird der Versuch mit der Versuchsnummer E9/15 erläutert. PE-BioGT-139A wird mit einem HDI-Polyisocyanat (75% in Solvent Naphtha) bei 75°C aufgeschmolzen, mit Titandioxid und einem Organosilan versetzt, dispergiert und mittels beheiztem Walzenstuhl homogenisiert. Die Siebdruckpaste wurde auf 70 °C erhitzt und bei dieser Temperatur mittels beheiztem Stahlsieb (270 Mesh per inch) auf Glas gedruckt. Da die Farbe auf dem kalten Glas erstarrt, ist es möglich, weitere Farben zu drucken. Anschließend wird das bedruckte Glas 10 min im Ofen bei 200 °C gehärtet.

Die anderen Versuche wurden analog mit den in der Tabelle genannten Verbindungen und Bedingungen durchgeführt.

In der Figur 1 sind die Viskositätskurven der Polyesterpolyole abgebildet.

## Patentansprüche

1. Thermoplastische Siebdruckpaste, umfassend
- ein oder mehrere hydroxyfunktionelle Polyester,
- ein oder mehrere blockierte Polyisocyanate,
- Pigmente,
- Additive,
**dadurch gekennzeichnet, dass** die Paste bei Raumtemperatur fest ist, dass der Schmelz- bzw. Erweichungsbereich der thermoplastischen Siebdruckpaste bei Temperaturen von unter 90 °C liegt und dass die Paste frei von Bisphenol-A ist und frei von weiteren an der Polymerisation selbst unmittelbar beteiligten Substanzen.

2. Thermoplastische Siebdruckpaste nach Anspruch 1, **dadurch gekennzeichnet, dass** die Stoffe, die an den Polymerisationsprozess selbst unmittelbar beteiligt sind, die Viskosität vermindernde Stoffen (Reaktivverdünner) und Vernetzungsmittel bzw. Quervernetzungsmittel sind.

3. Thermoplastische Siebdruckpaste nach einem der Ansprüche 1-2, **dadurch gekennzeichnet, dass** die einzelnen Komponenten im nachfolgenden Gew.-%-Bereich vorliegen:
| | |
|---|---|
| ein oder mehrere hydroxyfunktionelle Polyester: | 20-80 Gew.-%, |
| ein oder mehrere blockierte Polyisocyanate: | 10-50 Gew.-%, |
| Pigmente | 5-40 Gew.-%, |
| Additive, jeweils | 0-10 Gew.-%. |

4. Thermoplastische Siebdruckpaste nach einem der Ansprüche 1-3, **dadurch gekennzeichnet, dass** ein oder mehrere hydroxyfunktionelle Polyester aus Verbindungen aus nachwachsenden Rohstoffen hergestellt wurden.

5. Thermoplastische Siebdruckpaste nach einem der Ansprüche 1-4, **dadurch gekennzeichnet,**
**dass** die ein oder mehreren hydroxyfunktionellen Polyester aus Verbindungen aus nachwachsenden Rohstoffen, ausgewählt aus der Gruppe, enthaltend Rizinusöl, Zucker, Glycerin, Traubenkernöl, Erdnussöl, Sesamöl, Rapsöl, Walnussöl, Weizenkeimöl, Makadamianussöl, Tapiokaöl, Baumwollsaatöl, Sojabohnenöl, Sonnenblumenöl, Leinöl, Mais und Maisöl, hergestellt wurden.

6. Thermoplastische Siebdruckpaste nach einem der Ansprüche 1-5, **dadurch gekennzeichnet, dass** die ein oder mehreren hydroxyfunktionellen Polyester auf Sebacinsäure und Bernsteinsäure und Butandiolen, ausgewählt aus der Gruppe, enthaltend 1,2-Butandiol, 1,3-Butandiol, 1,4-Butandiol und 2,3-Butandiol; Propandiolen wie 1,2-Propandiol, 1,3-Propandiol; und zyklischen Diolen, wie 1,4-Cyclohexandimethanol; Pentandiolen, wie 1,5-Pentandiol und Hexandiolen, wie 1,6-Hexandiol, basieren.

7. Thermoplastische Siebdruckpaste nach einem der Ansprüche 1-6, **dadurch gekennzeichnet, dass** die ein oder mehreren blockierten Polyisocyanate aus der Gruppe ausgewählt sind, die aus HDI, IPDI, PDI, TDI, MDI und CHDI besteht.

8. Thermoplastische Siebdruckpaste nach einem der Ansprüche 1-7, **dadurch gekennzeichnet, dass** die ein oder mehreren hydroxyfunktionellen Polyester auf Sebacinsäure und 1,4-Butandiol basieren und die ein oder mehreren blockierten Polyisocyanate auf HDI basieren.

9. Thermoplastische Siebdruckpaste nach einem der Ansprüche 1-8, **dadurch gekennzeichnet, dass** die Additive aus der Gruppe ausgewählt sind, die aus Haftvermittlern, Verlaufsmitteln, Rheologiemitteln, Entschäumern, Antikocheradditiven, Dispergieradditiven, Harzen, Thixotropierungsmitteln, Polyisocyanaten unterschiedlichen Typs, besteht.

10. Substrat, bedruckt mit der thermoplastischen Siebdruckpaste nach den Ansprüchen 1-9.

11. Substrat nach Anspruch 10, wobei das Substrat ein Glas ist.

12. Verfahren zur Herstellung der thermoplastischen Siebdruckpaste nach den Ansprüchen 1-9, **gekennzeichnet durch** die folgenden Schritte:
Bereitstellen ein oder mehrerer hydroxyfunktioneller Polyester,
Zugeben von ein oder mehreren blockierten Polyisocyanaten, Pigmenten und Additiven, und
Aufschmelzen bei einer Temperatur im Bereich von 70-90 °C, dispergieren und homogenisieren.

13. Verfahren zur Herstellung des mit der thermoplastischen Siebdruckpaste bedruckten Substrats nach den Ansprüchen 10-12, **gekennzeichnet durch** die folgenden Schritte:
a) Drucken der thermoplastischen Siebdruckpaste nach Anspruch 12 bei einer Temperatur im Bereich von 60-85 °C auf ein Substrat, wobei die Farbe unmittelbar nach dem Druck auf dem abgekühlten Substrat erstarrt, und
b) gegebenenfalls Wiederholen des Schrittes a) zur Aufbringung weiterer Farben auf das Substrat, und
c) Tempern des bedruckten Substrats für 5-30 Minuten bei 140-250 °C.

14. Verwendung der thermoplastischen Siebdruckpaste nach den Ansprüchen 1-9 für die Dekoration von Substraten.

15. Verwendung nach Anspruch 14, wobei das Substrat ein Glas ist.

## Claims

1. A thermoplastic screen printing paste comprising:
- one or more hydroxy-functional polyesters,
- one or more blocked polyisocyanates,
- pigments,
- additives,
**characterized in, that** the paste is solid at room temperature, that the melting or softening range of the thermoplastic screen printing paste lies at temperatures below 90°C and that the paste is free of bisphenol-A and free of further substances which are directly involved in polymerization.

2. The thermoplastic screen printing paste of claim 1, **characterized in that** the substances, which are directly involved in polymerization are substances which decrease the viscosity (reactive diluents) and crosslinking agents.

3. The thermoplastic screen printing paste of any of claims 1-2, **characterized in that** the individual components are present in the following range of percent by weight:
| | |
|---|---|
| -one or more hydroxy-functional polyesters | 20-80, |
| -one or more blocked polyisocyanates | 10-50, |
| -pigments | 5-40, |
| -additives, each | 0-10. |

4. The thermoplastic screen printing paste of any of claims 1-3, **characterized in that** the one or more hydroxy-functional polyesters are made from compounds from renewable raw materials.

5. The thermoplastic screen printing paste of any of claims 1-4, **characterized in that** the one or more hydroxy-functional polyesters are produced from compounds of renewable raw materials selected from the group consisting of castor oil, sugar, glycerine, grapeseed oil, peanut oil, sesame oil, rapeseed oil, walnut oil, wheat germ oil, macadamia nut oil, tapioca oil, cottonseed oil, soybean oil, sunflower oil, linseed oil, corn and corn oil.

6. The thermoplastic screen printing paste of any of claims 1-5, **characterized in that** the one or more hydroxy-functional polyesters are based on sebacic acid and succinic acid and butane diols selected from the group consisting of 1,2-butane diol, 1,3-butane diol, 1,4-butane diol and 2,3-butane diol, propane diols like 1,2-propane diol, 1,3-propane diol and cyclic diols like 1,4-cyclohexane dimethanol, pentane diols like 1,5-pentane diol and hexane diols like 1,6-hexane diol.

7. The thermoplastic screen printing paste of any of claims 1-6, **characterized in that** the one or more blocked polyisocyanates are selected from the group consisting of HDI, IPDI, PDI, TDI, MDI and CHDI.

8. The thermoplastic screen printing paste of any of claims 1-7, **characterized in that** the one or more hydroxy-functional polyesters are based on sebacic acid and 1,4-butane diol and the one or more blocked polyisocyanates are based on HDI.

9. The thermoplastic screen printing paste of any of claims 1-8, **characterized in that** the additives are selected from the group consisting of adhesion promoters, flow agents, rheology agents, defoamers, antipopping additives, dispersant additives, resins, thixotropic agents and unblocked polyisocyanates of different type.

10. A substrate imprinted with the thermoplastic screen printing paste of any of claims 1-9.

11. The substrate of claim 10, wherein the substrate is a glass.

12. A method for producing the thermoplastic screen printing paste of any of claims 1-9, **characterized in** the following steps: providing one or more hydroxy-functional polyesters, adding one or more blocked polyisocyanates, pigments and additives and melting at a temperature in the range of 70-90°C, dispersing and homogenizing.

13. A method for making the substrate imprinted with the thermoplastic screen printing paste of any of claims 10-12, **characterized in** the following steps:
a) printing the thermoplastic screen printing paste of claim 12 at a temperature in the range of 60-85°C onto a substrate, wherein the color solidifies immediately after being printed on the cooled substrate, and
b) optional repeating of step a) to apply other colors to the substrate and
c) tempering of the imprinted substrate for 5-30 minutes at 140-250 °C.

14. Use of the thermoplastic screen printing paste of any of claims 1-9 for the decoration of substrates.

15. Use according to claim 14, wherein the substrate is a glass.

## Revendications

1. Pâte thermoplastique de sérigraphie, comportant
- un ou plusieurs polyesters à fonctionnalité hydroxy ;
- un ou plusieurs polyisocynates bloqués ;
- des pigments ;
- des additifs,
**caractérisée par le fait que** la pâte est solide à la température ambiante, que la plage de fusion ou de ramollissement de la pâte thermoplastique de sérigraphie se situe à des températures inférieures à 90 °C et que la pâte est exempte de bisphénol A et exempte d'autres substances participant directement à la polymérisation elle-même.

2. Pâte thermoplastique de sérigraphie selon la revendication 1, **caractérisée par le fait que** les substances, qui participent directement au processus de polymérisation lui-même, sont des substances réduisant la viscosité (diluants réactifs) et des agents de réticulation ou des agents de réticulation transversale

3. Pâte thermoplastique de sérigraphie selon l'une des revendications 1 ou 2, **caractérisée par le fait que** les composés individuels sont présents dans les plages de % en poids suivantes :
| | |
|---|---|
| - un ou plusieurs polyesters à fonctionnalité hydroxy : | 20-80 % en poids, |
| - un ou plusieurs polyisocynates bloqués : | 10-50 % en poids, |
| - pigments : | 5-40 % en poids, |
| - additifs, chacun : | 0-10 % en poids. |

4. Pâte thermoplastique de sérigraphie selon l'une des revendications 1 à 3, **caractérisée par le fait qu'**un ou plusieurs polyesters à fonctionnalité hydroxy ont été obtenus à partir de composés de matières premières renouvelables.

5. Pâte thermoplastique de sérigraphie selon l'une des revendications 1 à 4, **caractérisée par le fait**
**que** le ou les polyesters à fonctionnalité hydroxy ont été obtenus à partir de composés de matières premières renouvelables, choisis dans le groupe comportant l'huile de ricin, le sucre, le glycérol, l'huile de pépins de raisin, l'huile d'arachide, l'huile de sésame, l'huile de colza, l'huile de noix, l'huile de germe de blé, l'huile de noix de macadamia, l'huile de tapioca, l'huile de graine de coton, l'huile de soja, l'huile de tournesol, l'huile de lin, le maïs, l'huile de maïs.

6. Pâte thermoplastique de sérigraphie selon l'une des revendications 1 à 5, **caractérisée par le fait que** le ou les polyesters à fonctionnalité hydroxy sont basés sur l'acide sébacique et l'acide succinique et les butanediols choisis dans le groupe comprenant le 1,2-butanediol, le 1,3-butanediol, le 1,4-butanediol et le 2,3-butanediol ; les propanediols comme le 1,2-propanediol, le 1,3-propanediol ; et les diols cycliques, comme le 1,4-cyclohexanediméthanol ; les pentanediols, comme le 1,5-pentanediol et les hexanediols, comme le 1,6-hexanediol.

7. Pâte thermoplastique de sérigraphie selon l'une des revendications 1 à 6, **caractérisée par le fait que** le ou les polyisocynates bloqués sont choisis dans le groupe qui comprend le HDI, l'IPDI, le PDI, le TDI, le MDI et le CHDI.

8. Pâte thermoplastique de sérigraphie selon l'une des revendications 1 à 7, **caractérisée par le fait que** le ou les polyesters à fonctionnalité hydroxy sont basés sur l'acide sébacique et le 1,4-butanediol et le ou les polyisocynates bloqués sont basés sur le HDI.

9. Pâte thermoplastique de sérigraphie selon l'une des revendications 1 à 8, **caractérisée par le fait que** les additifs sont choisis dans le groupe qui comprend les agents adhésifs, les agents de contrôle d'écoulement, les agents rhéologiques, les agents antimoussants, les agents anti-cuisson, les additifs dispersants, les résines, les agents thixotropes, les polyisocyanates de types différents.

10. Substrat, imprimé avec la pâte thermoplastique de sérigraphie selon l'une des revendications 1 à 9.

11. Substrat selon la revendication 10, dans lequel le substrat est un verre.

12. Procédé de fabrication de la pâte thermoplastique de sérigraphie selon l'une des revendications 1 à 9, **caractérisé par** les étapes suivantes :
fournir un ou plusieurs polyesters à fonctionnalité hydroxy ;
ajouter un ou plusieurs polyisocyanates bloqués, des pigments et des additifs ; et
faire fondre à une température dans la plage de 70-90 °C, disperser et homogénéiser.

13. Procédé de fabrication du substrat imprimé avec la pâte thermoplastique de sérigraphie selon l'une des revendications 10 à 12, **caractérisé par** les étapes suivantes :
a) imprimer la pâte thermoplastique de sérigraphie selon la revendication 12 à une température dans la plage de 60-85 °C sur un substrat, la couleur se figeant sur le substrat refroidi immédiatement après l'impression ; et
b) le cas échéant répéter l'étape a) pour l'application d'autres couleurs sur le substrat ; et
c) recuire le substrat imprimé pendant 5-30 minutes à 140-250 °C.

14. Utilisation de la pâte thermoplastique de sérigraphie selon l'une des revendications 1 à 9 pour la décoration de substrats.

15. Utilisation selon la revendication 14, dans laquelle le substrat est un verre.
